# EUROPÄISCHE PATENTANMELDUNG

(11) **EP 2 363 046 A1**
(43) Veröffentlichungstag der Anmeldung: **07.09.2011**
(21) Anmeldenummer: 11153032.5
(22) Anmeldetag: 02.02.2011
(51) Int. Cl.: A47F 7/00, F16M 11/00

(54) **Motorradkoffer Teststation**

(30) Priorität: 26.02.2010 DE 202010000265 U
(71) Anmelder: POLO EXPRESSVERSAND Gesellschaft für Motorradbekleidung und Sportswear mbH, 41363 Jüchen (DE)
(72) Erfinder: Lentzen, Petra, 47877 Willich (DE)
(74) Vertreter: Kluin, Jörg-Eden

(57) **Zusammenfassung**

Eine Motorradpacktaschen-Teststation (100), insbesondere zum Testen der Befestigungsvorrichtung von Motorradpacktaschen (1, 1', 1", 1 "'), insbesondere für Kunden eines Ladenlokals, wobei Motorradpacktaschen-Aufnahmen (2, 2', 2", 2"', 2"", 2""') an der Motorradpacktaschen-Teststation (100) derart montiert sind, dass an ihnen Motorradpacktaschen (1, 1', 1 ", 1"') befestigbar sind.

## Beschreibung

Die Erfindung betrifft eine Motorradpacktaschen-Teststation, insbesondere zum Testen der Befestigungsvorrichtung von Motorradpacktaschen, insbesondere für Kunden eines Ladenlokals.

Motorradpacktaschen sind in vielerlei Ausgestaltungen bekannt. Beispielsweise gibt es Topcases, die auf dem Motorrad, etwa hinter der Sitzbank montiert werden und Seitenkoffer, die seitlich des Motorrades montiert werden. Darüber hinaus gibt es für die jeweilige Ausgestaltung meist eine Vielzahl unterschiedlicher Befestigungssysteme, bzw. Befestigungsvorrichtungen, die teilweise unterschiedliche Motorradpacktaschen-Aufnahmen benötigen. Die Befestigungssysteme unterscheiden sich in ihrer Handhabung und Festigkeit der Verbindung, die sie zwischen dem Motorrad und der Motorradpacktasche herstellen. Für den Kunden besteht daher ein Bedarf, verschiedene Motorradpacktaschen und insbesondere verschiedene Befestigungssysteme von Motorradpacktaschen, vor dem Kauf zu testen.

Die Erfindung hat es sich daher zur Aufgabe gemacht, eine Motorradpacktaschen-Teststation zu schaffen, die diese Möglichkeit auf komfortable und ansprechende Weise eröffnet. Diese Aufgabe wird durch die in Anspruch 1 wiedergegebene Motorradpacktaschen-Teststation gelöst.

An der erfindungsgemäßen Motorradpacktaschen-Teststation sind Motorradpacktaschen-Aufnahmen derart montiert, dass an ihnen Motorradpacktaschen befestigbar sind. Wenn die Motorradpacktaschen-Teststation, wie bevorzugt, in einem Ladenlokal aufgestellt ist und verschiedene Motorradpacktaschen bereitgestellt werden, dann erhält der Kunde auf diese Weise die Möglichkeit, insbesondere die Befestigungsvorrichtungen der Motorradpacktaschen komfortabel vor dem Kauf zu testen. Er kann etwa ausprobieren, wie lange er für die Montage und Demontage braucht und einen Eindruck von der Festigkeit der Verbindung zwischen Motorradpacktasche und Motorradpacktaschen-Aufnahme gewinnen.

In der bevorzugten Ausführungsform sind verschiedenartige Motorradpacktaschen-Aufnahmen, beispielsweise verschiedenartige Seitenkoffer-Aufnahmen, an einer einzigen Motorradpacktaschen-Teststation montiert. Hierdurch erhält der Kunde die Möglichkeit, auch Befestigungssysteme, die verschiedenartige Motorradpacktaschen-Aufnahmen benötigen, nebeneinander zu testen und hierdurch direkt zu vergleichen.

In einer bevorzugten Ausführungsform sind lediglich Topcase-Aufnahmen an der Motorradpacktaschen-Teststation montiert. Es hat sich gezeigt, dass der Kunde die Vorentscheidung, ob er sich für ein Topcase oder für einen Seitenkoffer interessiert, meist bereits getroffen hat, bevor er einzelne Motorradpacktaschen miteinander vergleicht. Daher ist ein nebeneinander Testen von Topcase und Seitenkoffer nicht erforderlich.

Aus demselben Grund sind in einer weiteren bevorzugten Ausführungsform lediglich Seitenkoffer-Aufnahmen an der Motorradpacktaschen-Teststation montiert.

Es ist denkbar, dass die Motorradpacktaschen-Teststation nicht selbststehend, sondern beispielsweise an einer Wand des Ladenlokals befestigbar ist. Wenn die Motorradpacktaschen-Teststation, wie bevorzugt, selbststehend ist, dann ergibt sich eine größere Freiheit bei der Gestaltung des Ladenlokals.

Vorzugsweise ist die Motorradpacktaschen-Teststation quaderförmig und besonders bevorzugt mit ihrer längeren Erstreckung vertikal aufstellbar. Hierdurch stellt die Motorradpacktaschen-Teststation eine große Nutzfläche bereit, bei geringem Grundflächenbedarf.

Vorzugsweise ist ein Montagewerkzeug zur Montage der Motorradpacktaschen an den Motorradpacktaschen-Aufnahmen unverlierbar an der Motorradpacktaschen-Teststation befestigt. Hierdurch erübrigt es sich, dass der Kunde etwa Verkäufer um das Werkzeug bitten muss, womit eine Schwelle zur Nutzung für den Kunden entfällt und die Verkäufer entlastet sind.

Vorzugsweise ist das Montagewerkzeug ein Schraubenzieher und die Befestigung erfolgt, weiter bevorzugt, mittels eines Stahlseils.

Bestimmte Kombinationen von Motorradpacktaschen mit Motorradpacktaschen-Aufnahmen erfordern Adaptermittel, beispielsweise Universaladapterplatten. Wenn diese, wie bevorzugt, unverlierbar an der Motorradpacktaschen-Teststation befestigt sind, dann kann der Kunde diese selbst in Anwendung bringen. Die unverlierbare Befestigung erfolgt bevorzugt mittels eines Stahlseils.

Vorzugsweise ist das Bild eines Motorrades so an der Motorradpacktaschen-Teststation vorgesehen, dass es zu der Position der Motorradpacktaschen-Aufnahmen passt. Das Bild ist also bevorzugt derart angeordnet, dass die Position des Bildes der Motorradpacktaschen-Aufnahmen mit der Position der an der Motorradpacktaschen-Teststation montierten Motorradpacktaschen-Aufnahmen übereinstimmt. Hierdurch wird dem Kunden der Zweck der Motorradpacktaschen-Teststation verdeutlicht und der Aufforderungscharakter der Motorradpacktaschen-Teststation gesteigert. Das Bild ist bevorzugt im Maßstab eins zu eins vorgesehen.

In der bevorzugten Ausführungsform stellt die Motorradpacktaschen-Teststation Kundeninformation bereit.

Wenn an der Motorradpacktaschen-Teststation, wie bevorzugt, mindestens ein Flachbildschirm vorgesehen ist, dann kann die Kundeninformation auf besonders abwechslungsreiche Weise bereit gestellt werden.

Eine weitere vorteilhafte Weise der Kundeninformationsbereitstellung ergibt sich, wenn, wie bevorzugt, an der Motorradpacktaschen-Teststation mindestens eine Informationstafel vorgesehen ist.

Die Erfindung soll nun anhand von in den Zeichnungen dargestellten Ausführungsbeispielen näher erläutert werden. Es zeigen:
- Fig. 1: Eine Ansicht von oben auf eine erfindungsgemäße Motorradpacktaschen-Teststation mit Seitenkoffer-Aufnahmen;
- Fig. 2: Eine Seitenansicht der Motorradpacktaschen-Teststation nach Fig. 1, mit Blickrichtung wie Pfeil II in Fig. 1;
- Fig. 3: Eine Seitenansicht der Motorradpacktaschen-Teststation nach Fig. 1, mit Blickrichtung wie Pfeil III in Fig. 1
- Fig. 4: Eine Ansicht von oben auf eine erfindungsgemäße Motorradpacktaschen-Teststation mit Topcase-Aufnahmen;
- Fig. 5: Eine Seitenansicht der Motorradpacktaschen-Teststation nach Fig. 4, mit Blickrichtung wie Pfeil V in Fig. 4;
- Fig. 6: Eine Seitenansicht der Motorradpacktaschen-Teststation nach Fig. 4, mit Blickrichtung wie Pfeil VI in Fig. 4.

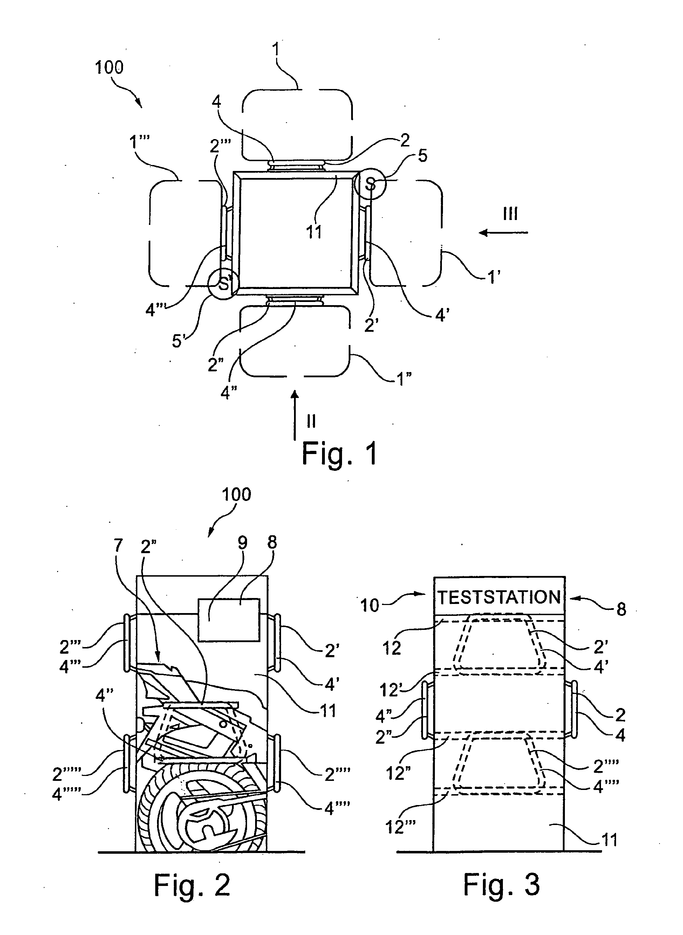

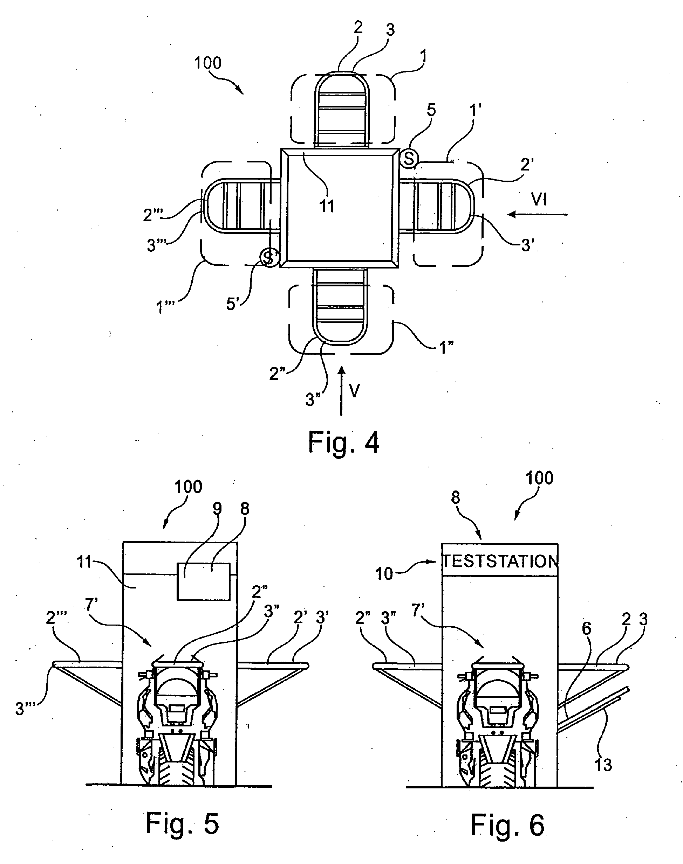

Die als ganzes mit 100 bezeichnete, gezeigte Motorradpacktaschen-Teststation umfasst eine freistehende Basis 11, an der in dem in den Fig. 1 bis 3 gezeigten Ausführungsbeispiel Seitenkoffer-Aufnahmen 4, 4', 4", 4"', 4"", 4""' und in dem in den Fig. 4 bis 6 gezeigten Ausführungsbeispiel Topcase-Aufnahmen 3, 3', 3", 3'" montiert sind. Es sind jeweils verschiedenartige Seitenkoffer-Aufnahmen 4, 4', 4", 4"', 4"", 4""' und verschiedenartige Topcase-Aufnahmen 3, 3', 3", 3'" an der Motorradpacktaschen-Teststation 100 montiert. In den Fig. 1 und 4 ist der Umriss von an den Motorradpacktaschen-Aufnahmen 2, 2', 2", 2''', 2"", 2'"" angeordneten Motorradpacktaschen 1, 1', 1", 1 '" mit gestrichelter Linie angedeutet.

Die Basis 11 ist quaderförmig. Ihre längere Erstreckung ist vertikal ausgerichtet. Die Länge der längeren Erstreckung, also der Höhe der Basis 11, beträgt im gezeigten Ausführungsbeispiel 1500 Millimeter. Die Grundfläche der Basis ist quadratisch. Sie weist eine Kantenlänge von 700 Millimetern auf. Die Basis 11 weist Streben 12, 12', 12", 12'" auf, deren Verteilung sich aus der Position der Motorradpacktaschen-Aufnahmen 2, 2', 2", 2"', 2"", 2""' ergibt (Fig. 3). Die Topcase-Aufnahmen 3, 3', 3", 3'" sind in einer Höhe von 750 Millimetern montiert.

Um eine Motorradpacktasche 1, 1', 1 ", 1 '" und insbesondere die Befestigungsvorrichtung einer Solchen vor dem Kauf zu testen, kann der Kunde eine von Ihm ausgewählte Motorradpacktasche ohne fremde Hilfe an der passenden Motorradpacktaschen-Aufnahme 2, 2', 2", 2"', 2"", 2""' montieren und den Komfort bei der Montage und anschließend die Festigkeit der Verbindung zwischen Motorradpacktasche und Motorradpacktaschen-Aufnahme prüfen. Um auch solche verschiedene Befestigungssysteme unmittelbar vergleichen zu können, die verschiedene Motorradpacktaschen-Aufnahmen 2, 2', 2", 2'", 2"", 2""' benötigen, sind verschiedene Motorradpacktaschen-Aufnahmen 2, 2', 2", 2"', 2"", 2""' an einer einzigen Motorradpacktaschen-Teststation 100 angeordnet. Hierbei erfolgt allerdings eine Vorabunterteilung hinsichtlich Topcase oder Seitenkoffer. An einer einzigen Motorradpacktaschen-Teststation 100 sind jeweils ausschließlich Motorradpacktaschen-Aufnahmen 2, 2', 2", 2"', 2"", 2""' für einen dieser beiden Packtaschentypen montiert.

Es ist Montagewerkzeug 5, 5', in der Form von zwei in den Zeichnungen nicht dargestellten Schraubenziehern S, S', die mit Stahlseilen an der Basis 11 gesichert sind, vorgesehen.

Zudem sind Adaptermittel 6 in Form von Universaladapterplatten bereitgestellt. Wie Fig. 6 zeigt, ist ein Schrägfach 13 vorgesehen, in dem die Adaptermittel 6 verstaut sind. Sie sind ebenfalls mit Stahlseilen gesichert. Das Schrägfach 13 ist unter einer Motorradpacktaschen-Aufnahme montiert.

Die Basis 11 umfasst Seitenflächen, auf denen das Bild eines Motorrades 7, 7' im Maßstab 1:1 derart angebracht ist, dass die Position der Motorradpacktaschen-Aufnahmen 2, 2', 2", 2"', 2"", 2""' auf dem Bild mit der an der Motorradpacktaschen-Teststation 100 übereinstimmen. Wie ein Vergleich der Fig. 2 und 5 zeigt, kommt in dem Ausführungsbeispiel mit Seitenkofferaufnahmen 4, 4', 4", 4"', 4"", 4""' die seitliche Abbildung eines Motorrades zur Anwendung, während in dem Ausführungsbeispiel mit Topcase-Aufnahmen 3, 3', 3", 3'" das Bild einer Rückansicht eines Motorrades vorgesehen ist.

Zudem ist Kundeninformation 8 bereitgestellt. Dies erfolgt zum einen über Flachbildschirme 9 und zum anderen über Informationstafeln 10. Die Informationstafeln 10 erstrecken sich im gezeigten Ausführungsbeispiel über die gesamte Breite der Basis 11 und sind im oberen Bereich der Seitenflächen der Basis 11 angeordnet. Sie erstrecken sich über eine Höhe von 200 Millimeter. An einer einzigen Motorradpacktaschen-Teststation 100 sind zwei Flachbildschirme 9 und zwei Informationstafeln 10 vorgesehen. In dem Ausführungsbeispiel mit Topcase-Aufnahmen 3, 3', 3", 3'" sind vier Topcase-Aufnahmen an einer einzigen Motorradpacktaschen-Teststation 100 vorgesehen. In dem Ausführungsbeispiel mit Seitenkoffer-Aufnahmen 4, 4', 4", 4"', 4"", 4""'
sind sechs Seitenkoffer-Aufnahmen an einer einzigen Motorradpacktaschen-Teststation montiert. Wie insbesondere Fig. 2 zeigt, sind in diesem Ausführungsbeispiel an zwei gegenüberliegenden Seiten der Basis 11 zwei Seitenkoffer-Aufnahmen 2', 2"', 2"", 2""' übereinander an derselben Seite montiert.

### Bezugszeichenliste:

- 100: Motorradpacktaschen-Teststation
- 1, 1',1",1'": Motorradpacktaschen
- 2, 2', 2", 2'", 2"", 2""': Motorradpacktaschen-Aufnahmen
- 3, 3', 3", 3'": Topcase-Aufnahmen
- 4, 4', 4", 4'", 4"", 4'"": Seitenkoffer-Aufnahmen
- 5,5': Montagewerkzeug
- 6: Adaptermittel
- 7, 7': Bild eines Motorrads
- 8: Kundeninformation
- 9: Flachbildschirm
- 10: Informationstafel
- 11: Basis
- 12, 12', 12", 12"': Streben
- 13: Schrägfach

- S, S': Schraubenzieher

## Patentansprüche

1. Motorradpacktaschen-Teststation (100), insbesondere zum Testen der Befestigungsvorrichtung von Motorradpacktaschen (1, 1', 1 ", 1 "'), insbesondere für Kunden eines Ladenlokals, wobei Motorradpacktaschen-Aufnahmen (2, 2', 2", 2"', 2"", 2""') an der Motorradpacktaschen-Teststation (100) derart montiert sind, dass an ihnen Motorradpacktaschen (1, 1', 1 ", 1 "') befestigbar sind.

2. Motorradpacktaschen-Teststation nach Anspruch 1, **dadurch gekennzeichnet, dass** verschiedenartige Motorradpacktaschen-Aufnahmen (2, 2', 2", 2'", 2"", 2'"") an einer einzigen Motorradpacktaschen-Teststation (100) montiert sind.

3. Motorradpacktaschen-Teststation nach Anspruch 1 oder 2, **dadurch gekennzeichnet, dass** lediglich Topcase-Aufnahmen (3, 3', 3", 3"') an der Motorradpacktaschen-Teststation (100) montiert sind.

4. Motorradpacktaschen-Teststation nach Anspruch 1 oder 2, **dadurch gekennzeichnet, dass** lediglich Seitenkoffer-Aufnahmen (4, 4', 4", 4"', 4"", 4'"") an der Motorradpacktaschen-Teststation (100) montiert sind.

5. Motorradpacktaschen-Teststation nach einem der Ansprüche 1 bis 4, **dadurch gekennzeichnet, dass** die Motorradpacktaschen-Teststation (100) selbststehend ist.

6. Motorradpacktaschen-Teststation nach einem der Ansprüche 1 bis 5, **dadurch gekennzeichnet, dass** die Motorradpacktaschen-Teststation (100) quaderförmig ist.

7. Motorradpacktaschen-Teststation nach einem der Ansprüche 1 bis 6, **dadurch gekennzeichnet, dass** die Motorradpacktaschen-Teststation (100) mit ihrer längeren Erstreckung vertikal aufstellbar ist.

8. Motorradpacktaschen-Teststation nach einem der Ansprüche 1 bis 7, **dadurch gekennzeichnet, dass** ein Montagewerkzeug (5, 5') zur Montage der Motorradpacktaschen (1, 1', 1 ", 1'") an den Motorradpacktaschen-Aufnahmen (2, 2', 2", 2"', 2"", 2""') unverlierbar an der Motorradpacktaschen-Teststation (100) befestigt ist.

9. Motorradpacktaschen-Teststation nach Anspruch 8, **dadurch gekennzeichnet, dass** ein Schraubenzieher (S, S') mittels eines Stahlseils an der Motorradpacktaschen-Teststation (100) befestigt ist.

10. Motorradpacktaschen-Teststation nach einem der Ansprüche 1 bis 9, **dadurch gekennzeichnet, dass** Adaptermittel (6) mittels eines Stahlseils an der Motorradpacktaschen-Teststation (100) befestigt sind.

11. Motorradpacktaschen-Teststation nach einem der Ansprüche 1 bis 10, **dadurch gekennzeichnet, dass** ein Bild eines Motorrades (7, 7') so an der Motorradpacktaschen-Teststation (100) vorgesehen ist, dass es zu der Position der Motorradpacktaschen-Aufnahmen (2, 2', 2", 2"', 2"", 2""') passt.

12. Motorradpacktaschen-Teststation nach einem der Ansprüche 1 bis 11, **dadurch gekennzeichnet, dass** Kundeninformation (8) bereitgestellt ist.

13. Motorradpacktaschen-Teststation nach Anspruch 12, **dadurch gekennzeichnet, dass** an der Motorradpacktaschen-Teststation (100) mindestens ein Flachbildschirm (9) vorgesehen ist.

14. Motorradpacktaschen-Teststation nach Anspruch 12 oder 13, **dadurch gekennzeichnet, dass** an der Motorradpacktaschen-Teststation (100) mindestens eine Informationstafel (10) vorgesehen ist.
